(19) Europäisches Patentamt / European Patent Office / Office européen des brevets

(11) **EP 4 343 888 A1**

(12) **EUROPEAN PATENT APPLICATION**
published in accordance with Art. 153(4) EPC

(43) Date of publication:
**27.03.2024 Bulletin 2024/13**

(21) Application number: **22872092.6**

(22) Date of filing: **23.09.2022**

(51) International Patent Classification (IPC):
**H01M 4/36** (2006.01)    **H01M 4/58** (2010.01)

(52) Cooperative Patent Classification (CPC):
**C01B 25/45; H01M 4/36; H01M 4/58; H01M 4/62; H01M 10/0525;** Y02E 60/10

(86) International application number:
**PCT/CN2022/120748**

(87) International publication number:
**WO 2023/046048 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.09.2021 CN 202111125874**

(71) Applicant: **BYD Company Limited**
**Shenzhen, Guangdong 518118 (CN)**

(72) Inventors:
• **CHENG, Bin**
  **Shenzhen, Guangdong 518118 (CN)**
• **PAN, Yi**
  **Shenzhen, Guangdong 518118 (CN)**
• **ZHUANG, Minghao**
  **Shenzhen, Guangdong 518118 (CN)**
• **YE, Yuzhen**
  **Shenzhen, Guangdong 518118 (CN)**
• **DENG, Ruoyi**
  **Shenzhen, Guangdong 518118 (CN)**

(74) Representative: **Arnold & Siedsma**
**Bezuidenhoutseweg 57**
**2594 AC The Hague (NL)**

(54) **BATTERY POSITIVE ELECTRODE MATERIAL, PREPARATION METHOD THEREFOR, AND APPLICATION THEREOF**

(57)    A battery positive electrode material is provided, which includes a core and a first shell layer arranged on a surface of the core. The core includes $LiMn_xFe_{1-x}PO_4$. The first shell layer includes $LiMn_yFe_{1-y}PO_4$, where $0<x<0.4$, and $0.6≤y≤0.9$. The battery positive electrode material has a multi-layer distribution structure. A preparation method and use of the battery positive electrode material are further provided.

FIG. 1

**Description**

## CROSS REFERENCE TO RELATED APPLICATION

The present disclosure claims priority to and benefits of Chinese Patent Application No. 202111125874.6, filed with National Intellectual Property Administration, PRC on September 24, 2021 and entitled "Battery positive electrodematerial, and preparation method and use thereof ",content of all of which is incorporated herein by reference.

## FIELD

The present disclosure relates to the field of lithium-ion batteries, and specifically to a battery positive electrode material, and a preparation method and use thereof.

## BACKGROUND

Polyanionic lithium iron phosphate $LiFePO_4$ is recognized as the safest positive electrode material for lithium-ion batteries, but its application is greatly limited by the low theoretical energy density (which is 586 Wh/kg). Lithium manganese phosphate $LiMnPO_4$ has a structure similar to that of lithium iron phosphate and has a higher theoretical energy density (which is 701 Wh/kg) than lithium iron phosphate, and therefore has great application prospects. However, because the electronic conductivity and lithium ion diffusion rate of lithium manganese phosphate (which are less than $10^{-10}$ S/cm and $10^{-15}$ cm²/s, respectively) are lower than the electronic conductivity and lithium ion diffusion rate of lithium iron phosphate (which are $10^{-9}$ S/cm and $10^{-14}$ cm²/s, respectively), and lithium manganese phosphate has is a problem of divalent Mn dissolution, lithium manganese phosphate cannot obtain excellent electrochemical performance. At present, a feasible solution is to partially substitute Fe with Mn to form $LiMn_xFe_{1-x}PO_4$ (0<x<1). A solution which can balance between energy density and kinetic properties is selected. Based on this, the materials are modified to achieve excellent properties.

## SUMMARY

A first aspect of the present disclosure provides a battery positive electrode material, which includes a core and a first shell layer arranged on a surface of the core. The core includes $LiMn_xFe_{1-x}PO_4$. The first shell layer includes $LiMn_yFe_{1-y}PO_4$, where 0<x<0.4, and 0.6≤y≤0.9.
In an embodiment of the present disclosure, a mass ratio of the core to the first shell layer is 1:(1.5-9).
In an embodiment of the present disclosure, a diameter of the core is between 0.5 $\mu$m and 5 $\mu$m.
In an embodiment of the present disclosure, a thickness of the first shell layer is between 0.09 $\mu$m and 2.7 $\mu$m.
In an embodiment of the present disclosure, in the battery positive electrode material, a molar ratio of Fe element to Mn element is 1:(1-9).
In an embodiment of the present disclosure, a second shell layer including $LiFePO_4$ and carbon is further arranged on a surface of the first shell layer.
In an embodiment of the present disclosure, a thickness of the second shell layer is between 20 nm and 600 nm.
In an embodiment of the present disclosure, in the battery positive electrode material, a content in percentages by weight of the core is between 10% and 40%; a content in percentages by weight of the first shell layer is between 45% and 80%; and a content in percentages by weight of the second shell layer is between 10% and 20%.
In an embodiment of the present disclosure, the battery positive electrode material further includes a dopant element, the dopant element including one or more of Ti, V, Co, Ni, Cu, Zn, Mg, Al, Ca, Mo, or W; and a content in percentages by weight of the dopant element in the battery positive electrode material is between 0.1% and 0.5%.
In an embodiment of the present disclosure, the first shell layer includes the dopant element.
In an embodiment of the present disclosure, a content in percentages by weight of the carbon in the battery positive electrode material is between 1% and 3%.
A second aspect of the present disclosure provides a method for preparing a battery positive electrode material, which includes the following steps.
A lithium source, an iron source, a manganese source, a phosphorus source, and a solvent are subjected to a first reaction in a reactor to obtain a core. The core includes $LiMn_xFe_{1-x}PO_4$, where 0<x<0.4. A temperature of the first reaction is between 375°C and 500°C. A pressure of the first reaction is greater than or equal to 23 MPa.
A lithium source, an iron source, a manganese source, a phosphorus source, a solvent, and the core are subjected to a second reaction in a reactor to coat a first shell layer on a surface of the core to obtain the core with the first shell layer. The first shell layer includes $LiMn_yFe_{1-y}PO_4$, where 0.6≤y≤0.9. A temperature of the second reaction is between 375°C and 500°C. A pressure of the second reaction is greater than or equal to 23 MPa.

The core with the first shell layer is calcined at between 500°C and 800°C to obtain the battery positive electrode material.

In an embodiment of the present disclosure, before the calcining the core with the first shell layer, the method further includes: a lithium source, an iron source, a phosphorus source, a carbon source, a solvent, and the core with the first shell layer are subjected to a third reaction in a reactor to coat a second shell layer on a surface of the first shell layer. The second shell layer includes $LiFePO_4$ and carbon. A temperature of the third reaction is between 375°C and 500°C. A pressure of the third reaction is greater than or equal to 23 MPa.

In an embodiment of the present disclosure, the lithium source includes an inorganic lithium salt and an organic lithium salt; the inorganic lithium salt includes one or more of lithium carbonate, lithium bicarbonate, lithium dihydrogen phosphate, lithium monohydrogen phosphate, lithium phosphate, lithium nitrate, lithium sulfate, lithium chromate, or lithium hydroxide; and the organic lithium salt includes one or more of lithium oxalate, lithium acetate, lithium benzoate, lithium citrate, or lithium benzoate.

In an embodiment of the present disclosure, the iron source includes one or more of iron oxide, ferrous carbonate, ferrous oxalate, ferrous sulfate, ferrous chloride, or ferrous acetate.

In an embodiment of the present disclosure, the manganese source includes one or more of manganese monoxide, manganese dioxide, manganese hydroxide, manganese carbonate, manganese oxalate, manganese sulfate, manganese nitrate, manganese sulfate, manganese chloride, or manganese acetate.

In an embodiment of the present disclosure, the phosphorus source includes one or more of phosphoric acid, ammonium dihydrogen phosphate, ammonium monohydrogen phosphate, or lithium dihydrogen phosphate.

In an embodiment of the present disclosure, the carbon source includes one or more of glucose, sucrose, polyvinyl alcohol, starch, or citric acid.

In an embodiment of the present disclosure, the calcining is carried out in an inert atmosphere, the inert atmosphere including one or more of nitrogen, argon, helium, neon, krypton, xenon, or radon.

A third aspect of the present disclosure provides a secondary battery, which includes a positive electrode, a negative electrode, a separator, and an electrolyte solution. The positive electrode includes a positive electrode plate. The positive electrode plate includes a current collector and a positive electrode material layer arranged on the current collector. The positive electrode material layer includes a battery positive electrode material according to the first aspect.

## BRIEF DESCRIPTION OF THE DRAWINGS

FIG. 1 shows a battery positive electrode material according to an embodiment of the present disclosure;
FIG. 2 is a schematic structural diagram of a battery positive electrode material of a structure A;
FIG. 3 is a schematic structural diagram of a positive electrode material of a structure B;
FIG. 4 shows a method for preparing a battery positive electrode material according to an embodiment of the present disclosure; and
FIG. 5 shows a method for preparing a battery positive electrode material according to another embodiment of the present disclosure.

## DETAILED DESCRIPTION

The technical solutions in the embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

Lithium manganese phosphate $LiMnPO_4$ has a higher theoretical energy density, but a lower electronic conductivity and lithium ion diffusion rate than lithium iron phosphate, which is not conducive to its capacity. Moreover, for positive electrode materials of batteries, the migration distance of ions and electrons from inside to outside in the materials is long, making it difficult for the transmission of ions and electrons, and further limiting the capacity of lithium manganese phosphate as a positive electrode material. To improve the electrochemical performance of lithium manganese phosphate as a positive electrode material, the present disclosure provides a battery positive electrode material. The battery positive electrode material includes an outer layer composed of $LiMn_xFe_{1-x}PO_4$ ($0.6 \leq x \leq 1$) with high manganese content and poor electronic and ionic conductivity, and an inner layer composed of $LiMn_xFe_{1-x}PO_4$ ($0 < x \leq 0.4$) with low manganese content and good electronic and ionic conductivity, to effectively shorten the transmission distance in the high-transmission-difficulty part (where the high-transmission-difficulty part is a part where the transmission of electrons and ions is difficult), thereby improving the electrochemical performance of the positive electrode material.

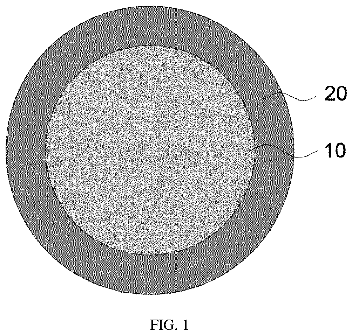

Referring to FIG. 1, FIG. 1 shows a battery positive electrode material according to an embodiment of the present disclosure. As shown in FIG. 1, the battery positive electrode material of the present disclosure includes a core 10 and a first shell layer 20 arranged on a surface of the core 10. The first shell layer 20 completely covers the core 10. The core 10 includes a lithium manganese iron phosphate compound represented by Formula I, and the first shell layer 20 includes a lithium manganese iron phosphate compound represented by Formula II.

$LiMn_xFe_{1-x}PO_4$- Formula I, where $0<x<0.4$.

$LiMn_yFe_{1-y}PO_4$- Formula II, where $0.6 \leq y \leq 0.9$.

In positive electrode materials of batteries, a long path for the diffusion of ions and electrons from the core of the material to the outside is not conducive to the transmission of ions and electrons. In the present disclosure, doping Fe element in $LiMnPO_4$ can improve the electrical conductivity of the positive electrode material. A high content of iron element in the core of the material can improve the diffusion rate of ions and electrons, thereby improving the electrochemical performance of the positive electrode material. The first shell layer has a high content of manganese element, to ensure a high energy density of the battery positive electrode material. Through such a structural configuration, the battery positive electrode material can have both a high energy density and a good electrical conductivity, and when used a battery, can enable the battery to have a high charge and discharge capacity.

In some embodiments of the present disclosure, the value of x in $LiMn_xFe_{1-x}PO_4$ may be, but is not limited to, 0.1, 0.2, 0.3, or 0.4, and the value of y in $LiMn_yFe_{1-y}PO_4$ may be, but is not limited to, 0.6, 0.7, 0.8, or 0.9. Controlling x to be less than or equal to 0.4 can ensure a high conductivity of the inner layer, and controlling y to be greater than or equal to 0.6 can ensure a high energy density of the entire material. In some embodiments of the present disclosure, the value of x is between 0.2 and 0.3 and the value of y is between 0.8 and 0.9. In the battery positive electrode material of the present disclosure, a content in percentages by weight of iron element in the core is higher than a content in percentages by weight of the first shell layer, and the higher content of iron in the core can make the core have a better electrical conductivity, to increase the transmission speed of ions and electrons at the core, and facilitate the transmission of ions and electrons in the battery positive electrode material. The first shell layer has a high content of manganese, to ensure that the entire battery positive electrode material has a high energy density.

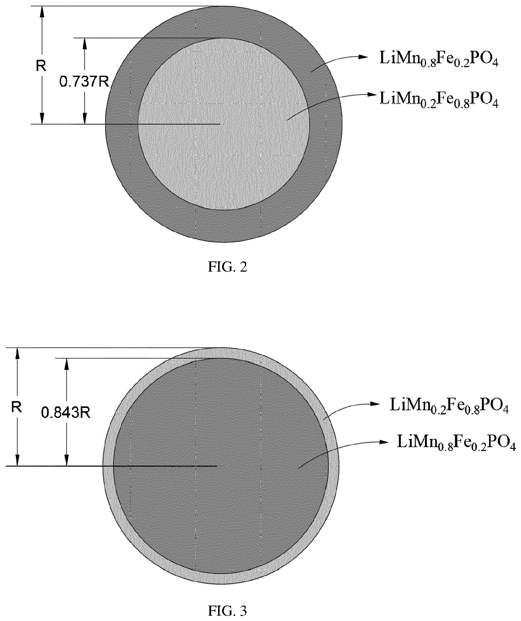

A positive electrode material of a structure B is used below for comparison to indicate that the positive electrode material of the present disclosure can improve the electrochemical performance of the material. For example, the positive electrode material of the present disclosure is of a structure A, and the composition of the battery positive electrode material of the structure A from inside to outside is $LiMn_{0.2}Fe_{0.8}PO_4(40\%)/LiMn_{0.8}Fe_{0.2}PO_4(60\%)$, where a content in percentages by weight of $LiMn_{0.2}Fe_{0.8}PO_4$ in the battery positive electrode material is 40%, and a content in percentages by weight of $LiMn_{0.8}Fe_{0.2}PO_4$ in the battery positive electrode material is 60%. The composition of the positive electrode material of the structure B from inside to outside is $LiMn_{0.8}Fe_{0.2}PO_4(60\%)/LiMn_{0.2}Fe_{0.8}PO_4(40\%)$. Referring to FIG. 2 and FIG. 3, FIG. 2 is a schematic structural diagram of a battery positive electrode material of a structure A, and FIG. 3 is a schematic structural diagram of a positive electrode material of a structure B. The arrangement of two layers of materials in the structure A is opposite to that in the structure B. To be specific, $LiMn_{0.8}Fe_{0.2}PO_4$ serving as the shell layer in the structure A serves as the core in the structure B. A mass ratio of $LiMn_{0.8}Fe_{0.2}PO_4$ to $LiMn_{0.2}Fe_{0.8}PO_4$ is 3:2 in both the structure A and the structure B. In other words, an energy density of the positive electrode material of the structure A is the same as that of the positive electrode material of the structure B. Because $LiMn_{0.8}Fe_{0.2}PO_4$ and $LiMn_{0.2}Fe_{0.8}PO_4$ have almost the same material density, the structure A and the structure B, though having different structural configurations, have similar overall particle sizes.

In the positive electrode material of the structure B, the core $LiMn_{0.8}Fe_{0.2}PO_4$ has a high manganese content and a low iron content, making it difficult for the transmission of electrons and ions in the core. In other words, the core is a high-transmission-difficulty layer. In the positive electrode material of the structure B, a maximum transmission distance of ions and electrons in the high-transmission-difficulty layer is 0.843 R. The transmission distance is calculated as follows. Assuming that a radius of the positive electrode material is R and a radius of the core is $R_1$, because the content in percentages by weight of the core $LiMn_{0.8}Fe_{0.2}PO_4$ in the positive electrode material is 60%, R and $R_1$ satisfy the following relationship:

$$\frac{4}{3}\pi R_1^3 = 60\% * \frac{4}{3}\pi R^3$$

$$R_1 = \sqrt[3]{0.6R} = 0.843R$$

As can be obtained based on the above formulas, $R_1$=0.843 R, i.e., the maximum transmission distance of ions and electrons in the high-transmission-difficulty layer of the positive electrode material of the structure B is 0.843 R.

In the battery positive electrode material of the structure A, the shell layer is a high-transmission-difficulty layer. Assuming that a radius of the battery positive electrode material is R and a radius of the core is $R_2$, a maximum transmission distance of ions and electrons in the high-transmission-difficulty layer of the battery positive electrode material of the structure A is R-$R_2$. Calculation formulas are as follows:

$$\frac{4}{3}\pi R_2^3 = 40\% * \frac{4}{3}\pi R^3$$

$$R_2 = \sqrt[3]{0.4}R = 0.737\text{R}$$

As can be obtained based on the above formula, $R_2$=0.737 R, i.e., the maximum transmission distance of ions and electrons in the high-transmission-difficulty layer of the positive electrode material of the structure A is 0.263 R. Therefore, compared with the positive electrode material of the structure B where $LiMn_{0.8}Fe_{0.2}PO_4$ is used as the core, the transmission distance of ions and electrons in the high-transmission-difficulty layer in the positive electrode material of the structure A is shorter, with a distance shortening ratio of 69%. The distance shortening ratio is calculated as follows: (0.843 R - 0.263 R)/0.843 R.

Similarly, when the content in percentages by weight of $LiMn_{0.8}Fe_{0.2}PO_4$ in the positive electrode material is 70%, the transmission distance in the high-transmission-difficulty layer of the battery positive electrode material of the structure A is 0.331 R, and the transmission distance in the high-transmission-difficulty layer of the battery positive electrode material of the structure B is 0.888 R. In other words, compared with the structural distribution of the structure B where $LiMn_{0.8}Fe_{0.2}PO_4$ is used as the core, the transmission distance of ions and electrons in the high-transmission-difficulty layer in the positive electrode material of the structure A is shorter, with a distance shortening ratio of 63%. The present disclosure also lists transmission distances in positive electrode materials with other contents of $LiMn_{0.8}Fe_{0.2}PO_4$ for comparison. Referring to Table 1, Table 1 is a comparison table of transmission distances in positive electrode materials having different contents of $LiMn_{0.8}Fe_{0.2}PO_4$.

Table 1 Comparison table of transmission distances in positive electrode materials with different contents of $LiMn_{0.8}Fe_{0.2}PO_4$

| No. | Content of $LiMn_{0.8}Fe_{0.2}PO_4$ | Structure A | Structure B | Distance shortening ratio |
|-----|-----|-----|-----|-----|
| 1 | 60% | 0.263R | 0.843R | 69% |
| 2 | 70% | 0.331R | 0.888R | 63% |
| 3 | 80% | 0.415R | 0.928R | 55% |
| 4 | 90% | 0.536R | 0.965R | 44% |

From the above calculation, it can be clearly seen that under the premise of having the same energy density, the structural distribution of the present disclosure can effectively shorten the transmission distance of ions and electrons in the high-transmission-difficulty layer of the battery positive electrode material, thereby improving the electrochemical performance of the battery positive electrode material and enabling the battery positive electrode material to effectively improve the rate performance of the battery.

In some embodiments of the present disclosure, a mass proportion of the first shell layer is greater than a mass proportion of the core in the battery positive electrode material. Further, a mass ratio of the core to the first shell layer is 1:(1.5-9). The mass ratio of the core to the first shell layer may specifically be, but is not limited to, 1:1.5, 1:2, 1:4, 1:5, 1:6, 1:7, 1:8, or 1:9. Controlling the mass ratio of the core to the first shell layer to be within the above range can ensure that the battery positive electrode material has a high energy density and a high electrical conductivity inside the material. When the mass proportion of the first shell layer is within the above range, the core-shell distribution structure has a good adjustment effect on the positive electrode material and can effectively improve the electrochemical performance of the positive electrode material.

In some embodiments of the present disclosure, a diameter of the core is between 0.5 $\mu$m and 5 $\mu$m. The diameter of the core may specifically be, but is not limited to, 0.5 $\mu$m, 0.8 $\mu$m, 1 $\mu$m, 2 $\mu$m, 4 $\mu$m, or 5 $\mu$m. In some embodiments of the present disclosure, a thickness of the first shell layer is between 0.09 $\mu$m and 2.7 $\mu$m. The thickness of the first shell layer may specifically be, but is not limited to, 0.09 $\mu$m, 0.1 $\mu$m, 0.5 $\mu$m, 1 $\mu$m, 2 $\mu$m, or 2.7 $\mu$m.

In some embodiments of the present disclosure, in the battery positive electrode material, a molar ratio of Fe element to Mn element is 1: (1 -9). The molar ratio of Fe element to Mn element in the battery positive electrode material may specifically be, but is not limited to, 1:1, 1:3, 1:5, or 1:9. For example, the molar ratio of Fe element to Mn element is 1:2.125 when the composition of the battery positive electrode material from inside to outside is $LiMn_{0.2}Fe_{0.8}PO_4(20\%)/LiMn_{0.8}Fe_{0.2}PO_4(80\%)$. Controlling the molar ratio of Fe element to Mn element in the battery positive electrode material to be within the above range can ensure a high energy density of the battery.

In some embodiments of the present disclosure, the battery positive electrode material further includes a dopant element. The dopant element includes one or more of Ti, V, Co, Ni, Cu, Zn, Mg, Al, or Ca. The dopant element can improve the ionic and electronic conductivity of the battery positive electrode material. In the present disclosure, both the core and the first shell layer of the battery positive electrode material may be doped with elements to improve the electrical conductivity. In some embodiments of the present disclosure, the dopant element is located in the first shell layer of the battery positive electrode material. In some embodiments of the present disclosure, a content in percentages by weight of the dopant element in the battery positive electrode material is between 0.1% and 0.5%. The content in percentages by weight of the dopant element in the battery positive electrode material may specifically be, but is not limited to, 0.1%, 0.3%, 0.4%, or 0.5%.

In some embodiments of the present disclosure, a second shell layer including $LiFePO_4$ and carbon is further arranged on a surface of the first shell layer of the battery positive electrode material. Because Mn dissolves out in an electrolyte solution and forms a high resistance layer at the interface between an electrode and the electrolyte solution, leading to an increase in the internal resistance of the battery and a reduction in the rate performance and cycle performance of the battery. Therefore, $LiFePO_4$ is coated on the surface of the first shell layer to isolate the first shell layer from the electrolyte solution, to suppress Mn dissolution. In some embodiments of the present disclosure, a content in percentages by weight of $LiFePO_4$ in the battery positive electrode material is between 10% and 20%. The content in percentages by weight of $LiFePO_4$ in the battery positive electrode material may specifically be, but is not limited to, 10%, 13%, 15%, or 20%. In the present disclosure, carbon in the second shell layer can improve the electrical conductivity of the battery positive electrode material and realize charging and discharging at a high rate. In some embodiments of the present disclosure, a content in percentages by weight of the carbon in the battery positive electrode material is between 1% and 5%. The content in percentages by weight of carbon in the battery positive electrode material may specifically be, but is not limited to, 1%, 3%, 4%, or 5%. In some embodiments of the present disclosure, a thickness of the second shell layer is between 20 nm and 600 nm. The thickness of the second shell layer may specifically be, but is not limited to, 20 nm, 50 nm, 100 nm, 200 nm, 300 nm, 400 nm, 500 nm, or 600 nm. In some embodiments of the present disclosure, the thickness of the second shell layer is between 25 nm and 400 nm.

The battery positive electrode material provided by the present disclosure has both a high energy density and good electrical conductivity, can realize charging and discharging at a high rate, and can effectively improve the cycle performance and rate performance of a battery when used in the battery.

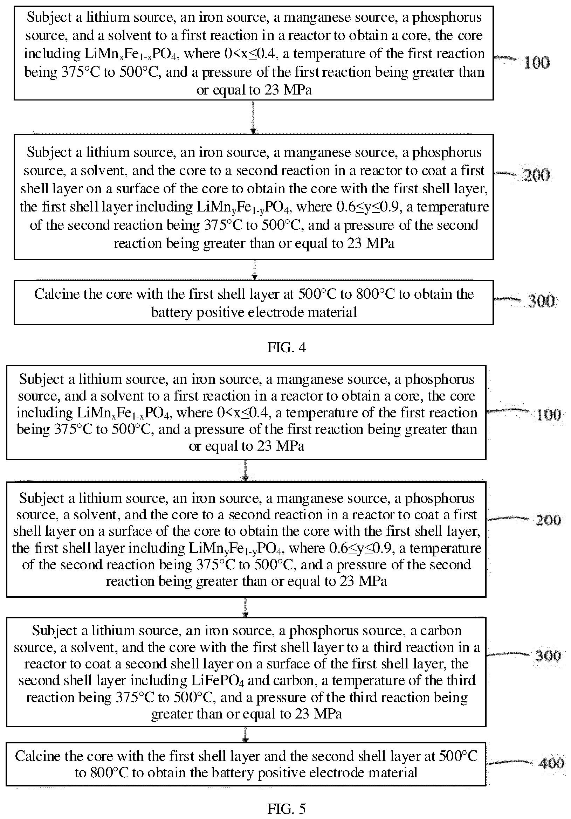

The present disclosure further provides a method for preparing a battery positive electrode material. FIG. 4 shows a method for preparing a battery positive electrode material according to an embodiment of the present disclosure. Referring to FIG. 4, the method includes the following steps.

In step 100, a lithium source, an iron source, a manganese source, a phosphorus source, and a solvent are subjected to a first reaction in a reactor to obtain a core. The core includes $LiMn_xFe_{1-x}PO_4$, where 0<x<0.4. A temperature of the first reaction is between 375°C and 500°C. A pressure of the first reaction is greater than or equal to 23 MPa.

In step 200, a lithium source, an iron source, a manganese source, a phosphorus source, a solvent, and the core are subjected to a second reaction in a reactor to coat a first shell layer on a surface of the core to obtain the core with the first shell layer. The first shell layer includes $LiMn_yFe_{1-y}PO_4$, where 0.6≤y≤0.9. A temperature of the second reaction is between 375°C and 500°C. A pressure of the second reaction is greater than or equal to 23 MPa.

In step 300, the core with the first shell layer is calcined at between 500°C and 800°C to obtain the battery positive electrode material.

In some embodiments of the present disclosure, the solvent includes water. In some embodiments of the present disclosure, the lithium source includes an inorganic lithium salt and an organic lithium salt. The inorganic lithium salt includes one or more of lithium carbonate, lithium bicarbonate, lithium dihydrogen phosphate, lithium monohydrogen phosphate, lithium phosphate, lithium nitrate, lithium sulfate, lithium chromate, or lithium hydroxide. The organic lithium salt includes one or more of lithium oxalate, lithium acetate, lithium benzoate, lithium citrate, or lithium benzoate. In some embodiments of the present disclosure, the iron source includes one or more of iron oxide, ferrous carbonate, ferrous oxalate, ferrous sulfate, ferrous chloride, or ferrous acetate. In some embodiments of the present disclosure, the manganese source includes one or more of manganese monoxide, manganese dioxide, manganese hydroxide, manganese carbonate, manganese oxalate, manganese sulfate, manganese nitrate, manganese sulfate, manganese chloride, or manganese acetate. In some embodiments of the present disclosure, the phosphorus source includes one or more of phosphoric acid, ammonium dihydrogen phosphate, ammonium monohydrogen phosphate, or lithium dihydrogen phosphate.

In some embodiments of the present disclosure, the temperature of the first reaction is between 375°C and 500°C, the pressure of the first reaction is between 23 MPa and 60 MPa, and a reaction time of the first reaction is between 0.5 h and 10 h. In some embodiments of the present disclosure, the reaction time of the first reaction is between 0.5 h and 3 h. A core with a stable structure can be formed when the reaction time is between 0.5 h and 3 h. The reaction time of the first reaction may specifically be, but is not limited to, 0.5 h, 1 h, 2 h, 3 h, 5 h, or 10 h. In some embodiments of the present disclosure, the temperature of the second reaction is between 375°C and 500°C, the pressure of the second reaction is between 23 MPa and 60 MPa, and a reaction time of the second reaction is between 0.5 h and 10 h. In some embodiments of the present disclosure, the reaction time of the second reaction is between 0.5 h and 3 h. A first shell layer with a stable structure can be formed when the reaction time is between 0.5 h and 3 h. According to an embodiment of the present disclosure, the first reaction and the second reaction are carried out in an inert atmosphere, and the inert atmosphere includes one or more of nitrogen, argon, helium, neon, krypton, xenon, or radon.

In some embodiments of the present disclosure, a temperature of the calcining is between 500°C and 800°C, and a time of the calcining is between 2 h and 10 h. The temperature of the calcining may specifically be, but is not limited to, 500°C, 600°C, 700°C, or 800°C, and the time of the calcining may be, but is not limited to, 2 h, 4 h, 6 h, or 10 h.

In the present disclosure, the core and the first shell layer are prepared using a supercritical fluid method. When the reaction temperature is greater than or equal to 375°C and the reaction pressure is greater than or equal to 23 MPa, the solvent in the reactor is in a supercritical fluid state, which can greatly improve the activity of the reaction and is beneficial to the formation of a dense crystal structure. The method is simple and convenient to operate, and the battery positive electrode material can be obtained through one sintering process, thereby greatly shortening the reaction time.

In some embodiments of the present disclosure, the method for preparing a battery positive electrode material further includes preparing a second shell layer. FIG. 5 shows a method for preparing a battery positive electrode material according to another embodiment of the present disclosure. Referring to FIG. 5, the method includes the following steps.

In step 100, a lithium source, an iron source, a manganese source, a phosphorus source, and a solvent are subjected to a first reaction in a reactor to obtain a core. The core includes $LiMn_xFe_{1-x}PO_4$, where $0<x<0.4$. A temperature of the first reaction is between 375°C and 500°C. A pressure of the first reaction is greater than or equal to 23 MPa.

In step 200, a lithium source, an iron source, a manganese source, a phosphorus source, a solvent, and the core are subjected to a second reaction in a reactor to coat a first shell layer on a surface of the core to obtain the core with the first shell layer. The first shell layer includes $LiMn_yFe_{1-y}PO_4$, where $0.6\leq y\leq 0.9$. A temperature of the second reaction is between 375°C and 500°C. A pressure of the second reaction is greater than or equal to 23 MPa.

In step 300, a lithium source, an iron source, a phosphorus source, a carbon source, a solvent, and the core with the first shell layer are subjected to a third reaction in a reactor to coat a second shell layer on a surface of the first shell layer. The second shell layer includes $LiFePO_4$ and carbon. A temperature of the third reaction is between 375°C and 500°C. A pressure of the third reaction is greater than or equal to 23 MPa.

In step 400, the core with the first shell layer and the second shell layer is calcined at between 500°C and 800°C to obtain the battery positive electrode material.

In some embodiments of the present disclosure, the carbon source includes one or more of glucose, sucrose, polyvinyl alcohol, starch, or citric acid. The temperature of the third reaction is between 375°C and 500°C, the pressure of the third reaction is between 23 MPa and 60 MPa, and the reaction time of the third reaction is between 0.5 h and 10 h. The supercritical fluid method is beneficial to the formation of a dense second shell layer, to suppress the dissolution of Mn more effectively. In some embodiments of the present disclosure, the third reaction is carried out in an inert atmosphere.

The method for preparing a battery positive electrode material according to the present disclosure is simple and highly operable, and can be used to prepare a battery positive electrode material with excellent rate performance and cycle performance.

The present disclosure further provides a positive electrode plate. The positive electrode plate includes a current collector and a positive electrode material layer arranged on the current collector. The positive electrode material layer includes the battery positive electrode material of the present disclosure. In some embodiments of the present disclosure, the positive electrode material layer may be prepared by mixing the battery positive electrode material, a conductive agent, a binder, and a solvent to form a positive electrode slurry, followed by coating and drying of the positive electrode slurry, to obtain the positive electrode material layer. To prepare the positive electrode slurry, first, the binder and the solvent may be mixed and fully stirred, followed by addition of the conductive agent and stirring. Then, the battery positive electrode material is added, and the mixture is stirred and sieved to obtain the positive electrode slurry. The conductive agent, the binder, and the solvent are conventional choices in the battery field. For example, the binder may be selected from one or more of polyvinylidene fluoride (PVDF), polytetrafluoroethylene (PTFE), polyvinyl alcohol (PVA), styrene butadiene rubber (SBR), polyacrylonitrile (PAN), polyimide (PI), polyacrylic acid (PAA), polyacrylate, polyolefin, sodium carboxymethyl cellulose (CMC), and sodium alginate. The conductive agent may be selected from one or more of carbon nanotubes, carbon black, and graphene.

The present disclosure further provides a secondary battery. The secondary battery includes a positive electrode, a negative electrode, an electrolyte solution, and a separator between the positive electrode and the negative electrode. The positive electrode includes the positive electrode plate provided by the present disclosure.

In the present disclosure, the negative electrode of the secondary battery may be any negative electrode known in the art. In some embodiments of the present disclosure, the negative electrode may include one or more of a carbon-based negative electrode, a silicon-based negative electrode, a tin-based negative electrode, or a lithium negative electrode. The carbon-based negative electrode may include graphite, hard carbon, soft carbon, graphene, and the like. The silicon-based negative electrode may include silicon, silicon carbon, silicon oxide, a silicon-metal compound, and the like. The tin-based negative electrode may include tin, tin carbon, tin oxide, and a tin-metal compound. The lithium negative electrode may include metal lithium or a lithium alloy. The lithium alloy may specifically be at least one of a lithium-silicon alloy, a lithium-sodium alloy, a lithium-potassium alloy, a lithium-aluminum alloy, a lithium-tin alloy, or a lithium-indium alloy. In some embodiments of the present disclosure, a current collector of the negative electrode is a copper foil, and an active material of the negative electrode includes one or more of natural graphite, artificial graphite, hard carbon, soft carbon, lithium titanate, iron oxide, lithium titanium phosphate, titanium dioxide, silicon, silicon oxide, tin, or antimony. The binder includes one or more of polyacrylic acid (PAA), polyvinylidene fluoride (PVDF), carboxymethyl cellulose (CMC), or styrene--butadiene rubber (SBR); The conductive agent includes one or more of acetylene black, Ketjen black, Super-P, carbon nanotubes, carbon nanofibers, activated carbon, or graphene. In the present disclosure, the negative electrode may be prepared using any method known in the art.

In the present disclosure, the separator of the secondary battery may be any separator known to those skilled in the art. For example, the separator may be one or more of a polyolefin microporous film, polyethylene terephthalate, polyethylene felt, glass fiber felt, or ultrafine glass fiber paper.

In the present disclosure, the electrolyte solution of the secondary battery includes a solution formed by a lithium salt electrolyte in a non-aqueous solvent. In some embodiments of the present disclosure, the lithium salt electrolyte includes one or more of lithium hexafluorophosphate ($LiPF_6$), lithium perchlorate ($LiClO_4$), lithium tetrafluoroborate ($LiBF_4$), lithium hexafluoroarsenate ($LiAsF_6$), lithium hexafluorosilicate ($LiSiF_6$), lithium tetraphenylborate ($LiB(C_6H5)_4$), lithium chloride (LiCl), lithium bromide (LiBr), lithium tetetrachloroaluminate ($LiAlCl_4$), lithium fluoroalkylsulfonate ($LiC(SO_2CF_3)_3$), $LiCH_3SO_3$, $LiN(SO_2CF_3)_2$, or $LiN(SO_2C_2F_5)_2$. In some embodiments of the present disclosure, the non-aqueous solvent includes one or more of a chain acid ester or a cyclic acid ester. In some embodiments of the present disclosure, the chain acid ester includes one or more of dimethyl carbonate (DMC), diethyl carbonate (DEC), methyl ethyl carbonate (EMC), methyl propyl carbonate (MPC), or dipropyl carbonate (DPC). In some embodiments of the present disclosure, the chain acid ester includes a chain organic ester containing fluorine, sulfur, or unsaturated bonds. In some embodiments of the present disclosure, the chain acid ester includes one or more of vinyl carbonate (EC), propylene carbonate (PC), vinylene carbonate (VC), $\gamma$-butyrolactone ($\gamma$-BL), or sultone. In some embodiments of the present disclosure, the cyclic acid ester includes a cyclic organic ester containing fluorine, sulfur, or unsaturated bonds. In some embodiments of the present disclosure, the non-aqueous solvent includes one or more of a chain ether or a cyclic ether. In some embodiments of the present disclosure, the cyclic ether includes one or more of tetrahydrofuran (THF), 2-methyltetrahydrofuran (2-MeTHF), 1,3-dioxolane (DOL), or 4-methyl-1,3-dioxolane (4-MeDOL). In some embodiments of the present disclosure, the cyclic ether includes a cyclic organic ether containing fluorine, sulfur, or unsaturated bonds. In some embodiments of the present disclosure, the chain ether includes one or more of dimethoxymethane (DMM), 1,2-dimethoxyethane (DME), 1,2-dimethoxypropane (DMP), or diethylene glycol dimethyl ether (DG). In some embodiments of the present disclosure, the chain ether includes a chain organic ether containing fluorine, sulfur, or unsaturated bonds. In some embodiments of the present disclosure, a concentration of the lithium salt electrolyte in the electrolyte solution is between 0.1 mol/L and 15 mol/L. In some embodiments of the present disclosure, the concentration of the lithium salt electrolyte is between 0.1 mol/L and 10 mol/L.

In some embodiments of the present disclosure, the battery may be prepared using any one of a lamination process or a winding process. In some embodiments of the present disclosure, the battery is prepared using the lamination process.

The secondary battery provided by the present disclosure has good cycle performance and safety performance with the use of the battery positive electrode plate of the present disclosure.

The technical solutions of the present disclosure will be further described below through multiple examples.

Example 1

A method for preparing a battery positive electrode material. The composition of the battery positive electrode material from inside to outside was $LiMn_{0.2}Fe_{0.8}PO_4$(30%)/$LiMn_{0.8}Fe_{0.2}PO_4$(60%)/$LiFePO_4$(10%)/C, and had a general formula of $LiMn_{0.54}Fe_{0.46}PO_4/C$. Battery positive electrode active materials in the battery positive electrode material were $LiMn_{0.2}Fe_{0.8}PO_4$, $LiMn_{0.8}Fe_{0.2}PO_4$, and $LiFePO_4$. $LiMn_{0.2}Fe_{0.8}PO_4(30\%)$ means that a content in percentages by weight of $LiMn_{0.2}Fe_{0.8}PO_4$ in the battery positive electrode active materials was 30%, and $LiFePO_4(10\%)$ means that a content in percentages by weight of $LiFePO_4$ in the battery positive electrode active materials was 10%.

Preparation of $LiMn_{0.2}Fe_{0.8}PO_4$ core

Lithium carbonate, ferric acetate, manganese acetate, and phosphoric acid were weighed according to a stoichiometric ratio and dissolved in water to obtain a mixed solution. The mixed solution was transferred to a high-pressure reactor, and argon gas was introduced into the high-pressure reactor to keep an inert atmosphere. The temperature was raised to 380°C while stirring, and the pressure of the reactor was 24 MPa. After 1 h of reaction, the precipitate was collected. The precipitate was washed with water and ethanol and dried to obtain a $LiMn_{0.2}Fe_{0.8}PO_4$ core.

Preparation of $LiMn_{0.8}Fe_{0.2}PO_4$ first shell layer

Lithium carbonate, ferric acetate, manganese acetate, and phosphoric acid were weighed according to a stoichiometric ratio and dissolved in water to obtain a mixed solution. The mixed solution was transferred to a high-pressure reactor, followed by addition of the $LiMn_{0.2}Fe_{0.8}PO_4$ core, and argon gas was introduced into the high-pressure reactor to keep an inert atmosphere. The temperature was raised to 380°C while stirring, and the pressure of the reactor was 24 MPa. After 1 h of reaction, the precipitate was collected. The precipitate was washed with water and ethanol and dried to obtain a core-shell structure $LiMn_{0.2}Fe_{0.8}PO_4/LiMn_{0.8}Fe_{0.2}PO_4$.

Preparation of second shell layer

Lithium carbonate, ferric acetate, glucose, and phosphoric acid were weighed according to a stoichiometric ratio and dissolved in water to obtain a mixed solution. The mixed solution was transferred to a high-pressure reactor, followed by addition of the core-shell structure $LiMn_{0.2}Fe_{0.8}PO_4/LiMn_{0.8}Fe_{0.2}PO_4$, and argon gas was introduced into the high-pressure reactor to keep an inert atmosphere. The temperature was raised to 380°C while stirring, and the pressure of the reactor was 24 MPa. After 1 h of reaction, the precipitate was collected. The precipitate was washed with water and ethanol and dried. The product was calcined at 700°C for 5 h to obtain a battery positive electrode material $LiMn_{0.2}Fe_{0.8}PO_4(30\%)/LiMn_{0.8}Fe_{0.2}PO_4(60\%)/LiFePO_4(10\%)/C$.

Preparation of secondary battery

The prepared battery positive electrode material, a conductive agent, and a binder were dispersed in N-methylpyrrolidone according to a mass ratio of 90:5:5 to obtian a slurry. The conductive agent was carbon black and carbon nanotubes. The binder was PVDF5130. The slurry had a solid content of 50%. The slurry was coated on a surface of an aluminum foil, dried, and cut into a positive electrode plate of 61 mm*72 mm. The positive electrode plate was assembled with a separator and a graphite negative electrode to obtain a battery.

Example 2

Example 2 was different from Example 1 in the mass ratio of the core to the first shell layer. The structure of the battery positive electrode material of Example 2 was $LiMn_{0.2}Fe_{0.8}PO_4(10\%)/LiMn_{0.8}Fe_{0.2}PO_4(80\%)/LiFePO_4(10\%)/C$, and had a general formula of $LiMn_{0.66}Fe_{0.34}PO_4/C$. Battery positive electrode active materials in the battery positive electrode material were $LiMn_{0.2}Fe_{0.8}PO_4$, $LiMn_{0.8}Fe_{0.2}PO_4$, and $LiFePO_4$. A content in percentages by weight of $LiMn_{0.2}Fe_{0.8}PO_4$ in the battery positive electrode active materials was 10%, and a content in percentages by weight of $LiMn_{0.8}Fe_{0.2}PO_4$ in the battery positive electrode active materials was 80%. A battery was prepared using the same method as that described Example 1.

Example 3

Example 3 was different from Example 1 in the mass ratio of the core to the first shell layer. The structure of the battery positive electrode material of Example 3 was $LiMn_{0.2}Fe_{0.8}PO_4(40\%)/LiMn_{0.8}Fe_{0.2}PO_4(45\%)/LiFePO_4(15\%)/C$, and had a general formula of $LiMn_{0.44}Fe_{0.56}PO_4/C$. Battery positive electrode active materials in the battery positive electrode material were $LiMn_{0.2}Fe_{0.8}PO_4$, $LiMn_{0.8}Fe_{0.2}PO_4$, and $LiFePO_4$. A content in percentages by weight of $LiMn_{0.2}Fe_{0.8}PO_4$ in the battery positive electrode active materials was 40%, and a content in percentages by weight of $LiMn_{0.8}Fe_{0.2}PO_4$ in the battery positive electrode active materials was 45%. A battery was prepared using the same method as that described Example 1.

Example 4

Example 4 was different from Example 1 in the mass ratio of the core to the first shell layer. The structure of the battery positive electrode material of Example 4 was $LiMn_{0.2}Fe_{0.8}PO_4$(10%)/$LiMn_{0.8}Fe_{0.2}PO_4$(75%)/$LiFePO_4$(15%)/C, and had a general formula of $LiMn_{0.62}Fe_{0.38}PO_4$/C. Battery positive electrode active materials in the battery positive electrode material were $LiMn_{0.2}Fe_{0.8}PO_4$, $LiMn_{0.8}Fe_{0.2}PO_4$, and $LiFePO_4$. A content in percentages by weight of $LiMn_{0.2}Fe_{0.8}PO_4$ in the battery positive electrode active materials was 10%, and a content in percentages by weight of $LiMn_{0.8}Fe_{0.2}PO_4$ in the battery positive electrode active materials was 75%. A battery was prepared using the same method as that described Example 1.

Example 5

Example 5 was different from Example 1 in the mass ratio of the core to the first shell layer. The structure of the battery positive electrode material of Example 5 was $LiMn_{0.2}Fe_{0.8}PO_4$(20%)/$LiMn_{0.8}Fe_{0.2}PO_4$(70%)/$LiFePO_4$(10%)/C, and had a general formula of $LiMn_{0.6}Fe_{0.4}PO_4$/C. Battery positive electrode active materials in the battery positive electrode material were $LiMn_{0.2}Fe_{0.8}PO_4$, $LiMn_{0.8}Fe_{0.2}PO_4$, and $LiFePO_4$. A content in percentages by weight of $LiMn_{0.2}Fe_{0.8}PO_4$ in the battery positive electrode active materials was 20%, and a content in percentages by weight of $LiMn_{0.8}Fe_{0.2}PO_4$ in the battery positive electrode active materials was 70%. A battery was prepared using the same method as that described Example 1.

Example 6

Example 6 was different from Example 5 in the composition of the core. The structure of the battery positive electrode material of Example 6 was $LiMn_{0.4}Fe_{0.6}PO_4$(20%)/$LiMn_{0.8}Fe_{0.2}PO_4$(70%)/$LiFePO_4$(10%)/C, and had a general formula of $LiMn_{0.64}Fe_{0.36}PO_4$/C. Battery positive electrode active materials in the battery positive electrode material were $LiMn_{0.4}Fe_{0.6}PO_4$, $LiMn_{0.8}Fe_{0.2}PO_4$, and $LiFePO_4$. A content in percentages by weight of $LiMn_{0.4}Fe_{0.6}PO_4$ in the battery positive electrode active materials was 20%, and a content in percentages by weight of $LiMn_{0.8}Fe_{0.2}PO_4$ in the battery positive electrode active materials was 70%. A battery was prepared using the same method as that described Example 1.

Example 7

Example 7 was different from Example 5 in the composition of the first shell layer. The structure of the battery positive electrode material of Example 7 was $LiMn_{0.2}Fe_{0.8}PO_4$(20%)/$LiMn_{0.9}Fe_{0.1}PO_4$(70%)/$LiFePO_4$(10%)/C, and had a general formula of $LiMn_{0.67}Fe_{0.33}PO_4$/C. Battery positive electrode active materials in the battery positive electrode material were $LiMn_{0.2}Fe_{0.8}PO_4$, $LiMn_{0.9}Fe_{0.1}PO_4$, and $LiFePO_4$. A content in percentages by weight of $LiMn_{0.2}Fe_{0.8}PO_4$ in the battery positive electrode active materials was 20%, and a content in percentages by weight of $LiMn_{0.9}Fe_{0.1}PO_4$ in the battery positive electrode active materials was 70%. A battery was prepared using the same method as that described Example 1.

Example 8

Example 8 was different from Example 5 in the composition of the first shell layer. The structure of the battery positive electrode material of Example 8 was $LiMn_{0.2}Fe_{0.7}PO_4$(20%)/$LiMn_{0.6}Fe_{0.4}PO_4$(70%)/$LiFePO_4$(10%)/C, and had a general formula of $LiMn_{0.56}Fe_{0.44}PO_4$/C. Battery positive electrode active materials in the battery positive electrode material were $LiMn_{0.2}Fe_{0.8}PO_4$, $LiMn_{0.6}Fe_{0.4}PO_4$, and $LiFePO_4$. A content in percentages by weight of $LiMn_{0.2}Fe_{0.8}PO_4$ in the battery positive electrode active materials was 20%, and a content in percentages by weight of $LiMn_{0.6}Fe_{0.4}PO_4$ in the battery positive electrode active materials was 70%. A battery was prepared using the same method as that described Example 1.

Example 9

Example 9 was different from Example 5 in the composition of the core and the composition of the first shell layer. The core and the first shell layer of the battery positive electrode material of Example 9 were doped with Co. The composition of the battery positive electrode material of Example 9 from inside to outside was $LiMn_{0.19}Fe_{0.8}Co_{0.01}PO_4$(20%)/$LiMn_{0.79}Fe_{0.2}Co_{0.01}PO_4$(70%)/$LiFePO_4$(10%)/C, and had a general formula of

$LiMn_{0.591}Fe_{0.40}Co_{0.009}PO_4/C$. Battery positive electrode active materials in the battery positive electrode material were $LiMn_{0.19}Fe_{0.8}Co_{0.01}PO_4$, $LiMn_{0.79}Fe_{0.2}Co_{0.01}PO_4$, and $LiFePO_4$.

A method for preparing the battery positive electrode material of Example 9 included the following steps.

Preparation of $LiMn_{0.19}Fe_{0.8}Co_{0.01}PO_4$ core

Lithium carbonate, ferric acetate, manganese acetate, cobalt acetate, and phosphoric acid were weighed according to a stoichiometric ratio and dissolved in water to obtain a mixed solution. The mixed solution was transferred to a high-pressure reactor, and argon gas was introduced into the high-pressure reactor to keep an inert atmosphere. The temperature was raised to 380°C while stirring, and the pressure of the reactor was 24 MPa. After 1 h of reaction, the precipitate was collected. The precipitate was washed with water and ethanol and dried to obtain a $LiMn_{0.19}Fe_{0.8}Co_{0.01}PO_4$ core.

Preparation of $LiMn_{0.79}Fe_{0.2}Co_{0.01}PO_4$ first shell layer

Lithium carbonate, ferric acetate, manganese acetate, cobalt acetate, and phosphoric acid were weighed according to a stoichiometric ratio and dissolved in water to obtain a mixed solution. The mixed solution was transferred to a high-pressure reactor, followed by addition of the $LiMn_{0.19}Fe_{0.8}Co_{0.01}PO_4$ core, and argon gas was introduced into the high-pressure reactor to keep an inert atmosphere. The temperature was raised to 380°C while stirring, and the pressure of the reactor was 24 MPa. After 1 h of reaction, the precipitate was collected. The precipitate was washed with water and ethanol and dried to obtain a core-shell structure $LiMn_{0.19}Fe_{0.7}Co_{0.01}PO_4/LiMn_{0.79}Fe_{0.2}Co_{0.01}PO_4$.

A second shell layer and a battery were prepared using the same method as that described Example 5.

Example 10

Example 10 was different from Example 5 in that the second shell layer did not include $LiFePO_4$. The structure of the battery positive electrode material of Example 10 was $LiMn_{0.2}Fe_{0.8}PO_4(25\%)/LiMn_{0.8}Fe_{0.2}PO_4(75\%)/C$, and had a general formula of $LiMn_{0.65}Fe_{0.35}PO_4/C$. Battery positive electrode active materials in the battery positive electrode material were $LiMn_{0.2}Fe_{0.8}PO_4$ and $LiMn_{0.8}Fe_{0.2}PO_4$. A battery was prepared using the same method as that described Example 1.

Example 11

Example 11 was different from Example 5 in the mass proportion of each layer. The structure of the battery positive electrode material of Example 11 was $LiMn_{0.2}Fe_{0.8}PO_4(20\%)/LiMn_{0.8}Fe_{0.2}PO_4(75\%)/LiFePO_4(5\%)/C$, and had a general formula of $LiMn_{0.64}Fe_{0.36}PO_4/C$. Battery positive electrode active materials in the battery positive electrode material were $LiMn_{0.2}Fe_{0.8}PO_4$, $LiMn_{0.8}Fe_{0.2}PO_4$, and $LiFePO_4$. A battery was prepared using the same method as that described Example 1.

Example 12

Example 12 was different from Example 1 in the mass ratio of the core to the first shell layer. The structure of the positive electrode material of Example 12 was $LiMn_{0.2}Fe_{0.8}PO_4(60\%)/LiMn_{0.8}Fe_{0.2}PO_4(30\%)/LiFePO_4(10\%)/C$, and had a general formula of $LiMn_{0.36}Fe_{0.64}PO_4/C$. Battery positive electrode active materials in the battery positive electrode material were $LiMn_{0.2}Fe_{0.8}PO_4$, $LiMn_{0.8}Fe_{0.2}PO_4$, and $LiFePO_4$. A content in percentages by weight of $LiMn_{0.2}Fe_{0.8}PO_4$ in the battery positive electrode active materials was 60%, and a content in percentages by weight of $LiMn_{0.8}Fe_{0.2}PO_4$ in the battery positive electrode active materials was 30%. A battery was prepared using the same method as that described Example 1.

Comparative Example 1

Comparative Example 1 was different from Example 1 in the structure of the positive electrode material. The structure of the positive electrode material of Comparative Example 1 was $LiMn_{0.8}Fe_{0.2}PO_4(70\%)/LiMn_{0.2}Fe_{0.8}PO_4(20\%)/LiFePO_4(10\%)/C$, and had a general formula of $LiMn_{0.6}Fe_{0.3}PO_4/C$. A battery was prepared using the same method as that described Example 1.

Comparative Example 2

Comparative Example 2 was different from Example 1 in that the positive electrode material of Comparative Example 2 was prepared by a hydrothermal method. A method for preparing the positive electrode material of Comparative Example 2 included the following steps.

Lithium carbonate, ferric acetate, manganese acetate, and phosphoric acid were weighed according to a stoichiometric ratio and dissolved in water to obtain a mixed solution. The mixed solution was transferred to a hydrothermal reactor, and argon gas was introduced into the hydrothermal reactor to keep an inert atmosphere. The temperature was raised to 175°C while stirring. After 8 h of reaction, the precipitate was collected. The precipitate was washed with water and ethanol and dried to obtain a $LiMn_{0.2}Fe_{0.8}PO_4$ core.

Lithium carbonate, ferric acetate, manganese acetate, and phosphoric acid were weighed according to a stoichiometric ratio and dissolved in water to obtain a mixed solution. The mixed solution was transferred to a hydrothermal reactor, followed by addition of the $LiMn_{0.2}Fe_{0.8}PO_4$ core, and argon gas was introduced into the hydrothermal reactor to keep an inert atmosphere. The temperature was raised to 175°C while stirring. After 8 h of reaction, the precipitate was collected. The precipitate was washed with water and ethanol and dried to obtain a core-shell structure $LiMn_{0.2}Fe_{0.8}PO_4/LiMn_{0.8}Fe_{0.2}PO_4$.

Lithium carbonate, ferric acetate, glucose, and phosphoric acid were weighed according to a stoichiometric ratio and dissolved in water to obtain a mixed solution. The mixed solution was transferred to a hydrothermal reactor, followed by addition of the core-shell structure $LiMn_{0.2}Fe_{0.8}PO_4/LiMn_{0.8}Fe_{0.2}PO_4$, and argon gas was introduced into the hydrothermal reactor to keep an inert atmosphere. The temperature was raised to 175°C while stirring. After 6.5 h of reaction, the precipitate was collected. The precipitate was washed with water and ethanol and dried. The product was calcined at 720°C for 7 h to obtain a battery positive electrode material $LiMn_{0.2}Fe_{0.8}PO_4(30\%)/LiMn_{0.8}Fe_{0.2}PO_4(60\%)/LiFePO_4(10\%)/C$. Although the elements and their total contents in the material prepared in Comparative Example 2 were the same as those in Example 1, the prepared shell layer and core diffused into each other to form a transition structure, an expected design structure could not be achieved, and the improvement of transmission of electrons and ions in the material was not significant. A battery was prepared using the same method as that described Example 1.

Comparative Example 3

Comparative Example 3 was different from Example 5 in the composition of the first shell layer. The structure of the positive electrode material of Comparative Example 3 was $LiMn_{0.2}Fe_{0.8}PO_4(20\%)/LiMn_{0.5}Fe_{0.5}PO_4(70\%)/LiFePO_4(10\%)/C$, and had a general formula of $LiMn_{0.39}Fe_{0.61}PO_4/C$. A content in percentages by weight of $LiMn_{0.2}Fe_{0.8}PO_4$ in the battery positive electrode active materials was 20%, and a content in percentages by weight of $LiMn_{0.5}Fe_{0.5}PO_4$ in the battery positive electrode active materials was 70%. A battery was prepared using the same method as that described Example 5.

Effect Examples

To evaluate the performance of the battery positive electrode material prepared in the present disclosure, the present disclosure further provides an effect embodiment.

The electrochemical performance of the batteries of Examples 1 to 12 and Comparative Examples 1 to 3 were tested. The batteries of Examples 1 to 12 and Comparative Examples 1 to 3 were charged at 25°C and at a constant current of 0.1 C and a constant voltage in a voltage test range of 2.8 to 4.3 V, the cut-off current being 0.02 C, and discharged at a constant current of 0.1 C. The initial charge and discharge capacities were recorded, and parameters of the batteries were calculated according to the following formulas: specific discharge capacity = initial discharge capacity of battery (mAh) / weight of positive electrode material (g); energy density = specific discharge capacity (mAh/g) * average discharge voltage (V). The test results are shown in Table 2.

Table 2. Table of parameters of electrochemical performance of Examples 1 to 12 and Comparative Examples 1 to 3

| Experimental group | General formula of composition | 0.1 C Specific discharge capacity (mAh·g$^1$) | 2 C Specific discharge capacity (mAh·g$^{-1}$) | Energy density (Wh·kg$^{-1}$) |
|---|---|---|---|---|
| Example 1 | $LiMn_{0.54}Fe_{0.46}PO_4/C$ | 156.5 | 140.4 | 575.6 |
| Example 2 | $LiMn_{0.66}Fe_{0.34}PO_4/C$ | 156.1 | 135.2 | 587.2 |

(continued)

| Experimental group | General formula of composition | 0.1 C Specific discharge capacity (mAh·g$^{1}$) | 2 C Specific discharge capacity (mAh·g$^{-1}$) | Energy density (Wh·kg$^{-1}$) |
|---|---|---|---|---|
| Example 3 | $LiMn_{0.44}Fe_{0.56}PO_4/C$ | 157.4 | 143.3 | 567.9 |
| Example 4 | $LiMn_{0.62}Fe_{0.38}PO_4/C$ | 155.4 | 136.3 | 580.3 |
| Example 5 | $LiMn_{0.6}Fe_{0.4}PO_4/C$ | 156.4 | 139.4 | 581.8 |
| Example 6 | $LiMn_{0.64}Fe_{0.36}PO_4/C$ | 155.7 | 134.2 | 583.6 |
| Example 7 | $LiMn_{0.67}Fe_{0.33}PO_4/C$ | 155.2 | 130.3 | 584.9 |
| Example 8 | $LiMn_{0.56}Fe_{0.44}PO_4/C$ | 156.3 | 140.1 | 577.1 |
| Example 9 | $LiMn_{0.591}Fe_{0.40}Co_{0.009}PO_4/C$ | 155.1 | 141.4 | 576.0 |
| Example 10 | $LiMn_{0.65}Fe_{0.35}PO_4/C$ | 155.6 | 137.5 | 584.3 |
| Example 11 | $LiMn_{0.64}Fe_{0.36}PO_4/C$ | 155.7 | 134.6 | 583.6 |
| Example 12 | $LiMn_{0.36}Fe_{0.64}PO_4/C$ | 157.3 | 135.1 | 558.7 |
| Comparative Example 1 | $LiMn_{0.6}Fe_{0.3}PO_4/C$ | 150.3 | 124.4 | 559.1 |
| Comparative Example 2 | $LiMn_{0.2}Fe_{0.8}PO_4$ | 148.3 | 120.1 | 545.4 |
| Comparative Example 3 | $LiMn_{0.39}Fe_{0.61}PO_4/C$ | 155.3 | 125.1 | 554.9 |

In Example 1 of the present disclosure, the first shell layer was $LiMn_{0.8}Fe_{0.2}PO_4$, the mass proportion of $LiMn_{0.8}Fe_{0.2}PO_4$ in the battery positive electrode material was 60%, and the mass proportion of $LiMn_{0.2}Fe_{0.8}PO_4$ was 30%. Such a structural distribution enabled the battery positive electrode material to have a higher electrical conductivity, so that the battery had good rate performance. In Example 2, the mass proportion of $LiMn_{0.8}Fe_{0.2}PO_4$ in the battery positive electrode material was 80%, so the battery had a high energy density. However, because the $LiMn_{0.8}Fe_{0.2}PO_4$ layer was thicker than that in Example 1, the rate performance of the battery was slightly lower. In Example 3, the mass proportion of $LiMn_{0.8}Fe_{0.2}PO_4$ in the battery positive electrode material was 45%, so the battery had a high energy density. The rate performance of the battery was higher than that in Example 1. In Example 4, the mass proportion of the second shell layer in the battery positive electrode material was 15%, the mass proportion of $LiMn_{0.8}Fe_{0.2}PO_4$ was 75%, and the entire material had a higher energy density than that in Example 1. In Example 5, the mass proportion of $LiMn_{0.8}Fe_{0.2}PO_4$ was 70%, and the rate performance of the battery was similar to that in Example 1. In Example 6, the composition of the core was $LiMn_{0.4}Fe_{0.6}PO_4$. Compared with Example 5, the battery of Example 6 had a higher energy density, but lower rate performance. In Example 7, the first shell layer was $LiMn_{0.9}Fe_{0.1}PO_4$, the high manganese content enabled the battery to have a higher energy density, but the battery had poor rate performance. In Example 8, the first shell layer was $LiMn_{0.6}Fe_{0.4}PO_4$, and the manganese content was lower than that in Example 5, so the battery had higher rate performance, but a lower energy density. In Example 9, the battery positive electrode material was doped with Co element. Compared with Example 5, the battery of Example 9 had higher rate performance. In Example 10, the second shell layer did not include $LiFePO_4$. The content of the first shell layer was high, so the battery had a high energy density. The content of the second shell layer was low, leading to a poor effect of suppressing manganese dissolution, so the cycle performance of the battery was poor. In Example 11, the second shell layer included a certain amount of $LiFePO_4$, and the battery had better cycle performance than the battery of Example 10. In Example 12, the mass proportion of $LiMn_{0.8}Fe_{0.2}PO_4$ in the battery positive electrode material was 30%, and the battery had a low energy density.

In Comparative Example 1, the core was $LiMn_{0.8}Fe_{0.2}PO_4$, and the general formula of the composition of the positive electrode material was similar to that in Example 5, but the rate performance was far lower than that in Example 5. In Comparative Example 2, the positive electrode material was prepared using the hydrothermal method. Because the crystallinity of the material prepared by the hydrothermal method was poor, the shell layer and the core diffused into each other to form a transition structure in the subsequent sintering process, the layering of the material was not obvious, an expected design structure could not be achieved, and the improvement of transmission of electrons and ions in the material was not significant. In Comparative Example 3, the first shell layer was $LiMn_{0.5}Fe_{0.5}PO_4$, which had a low manganese content, leading to a low energy density of the battery.

While exemplary embodiments of the present disclosure have been described above, the scope of the present disclosure is not limited thereto. It should be appreciated that some improvements and modifications can be made by those skilled in the art without departing from the technical principles of the present disclosure, which are also contemplated to be within the scope of the present disclosure.

**Claims**

1. A battery positive electrode material, comprising a core (10) and a first shell layer (20) arranged on a surface of the core (10), the core (10) comprising $LiMn_xFe_{1-x}PO_4$, and the first shell layer (20) comprising $LiMn_yFe_{1-y}PO_4$, wherein $0<x<0.4$, and $0.6\leq y\leq 0.9$.

2. The battery positive electrode material according to claim 1, wherein a mass ratio of the core (10) to the first shell layer (20) is 1:(1.5-9).

3. The battery positive electrode material according to claim 1 or 2, wherein a diameter of the core (10) is between 0.5 $\mu$m and 5 $\mu$m.

4. The battery positive electrode material according to any one of claims 1 to 3, wherein a thickness of the first shell layer (20) is between 0.09 $\mu$m and 2.7 $\mu$m.

5. The battery positive electrode material according to any one of claims 1 to 4, wherein in the battery positive electrode material, a molar ratio of Fe element to Mn element is 1:(1-9).

6. The battery positive electrode material according to any one of claims 1 to 5, wherein a second shell layer comprising $LiFePO_4$ and carbon is further arranged on a surface of the first shell layer (20).

7. The battery positive electrode material according to claim 6, wherein a thickness of the second shell layer is between 20 nm and 600 nm.

8. The battery positive electrode material according to claim 6 or 7, wherein in the battery positive electrode material, a content in percentages by weight of the core (10) is between 10% and 40%; a content in percentages by weight of the first shell layer (20) is between 45% and 80%; and a content in percentages by weight of the second shell layer is between 10% and 20%.

9. The battery positive electrode material according to any one of claims 1 to 8, wherein the battery positive electrode material further comprising a dopant element, the dopant element comprising one or more of Ti, V, Co, Ni, Cu, Zn, Mg, Al, Ca, Mo, or W; and a content in percentages by weight of the dopant element in the battery positive electrode material is between 0.1% and 0.5%.

10. The battery positive electrode material according to claim 9, wherein the first shell layer (20) comprises the dopant element.

11. The battery positive electrode material according to claim 6, wherein a content in percentages by weight of the carbon in the battery positive electrode material is between 1% and 3%.

12. A method for preparing a battery positive electrode material, comprising:

subjecting a lithium source, an iron source, a manganese source, a phosphorus source, and a solvent to a first reaction in a reactor to obtain a core (10), the core (10) comprising $LiMn_xFe_{1-x}PO_4$, wherein $0<x<0.4$, a temperature of the first reaction being between 375°C and 500°C, and a pressure of the first reaction being greater than or equal to 23 MPa;
subjecting a lithium source, an iron source, a manganese source, a phosphorus source, a solvent, and the core (10) to a second reaction in a reactor to coat a first shell layer (20) on a surface of the core (10) to obtain the core (10) with the first shell layer (20), the first shell layer (20) comprising $LiMn_yFe_{1-y}PO_4$, wherein $0.6\leq y\leq 0.9$,

a temperature of the second reaction being between 375°C and 500°C, and a pressure of the second reaction being greater than or equal to 23 MPa; and

calcining the core (10) with the first shell layer (20) at between 500°C and 800°C to obtain the battery positive electrode material.

13. The preparation method according to claim 12, wherein before the calcining the core (10) with the first shell layer (20), the method further comprises: subjecting a lithium source, an iron source, a phosphorus source, a carbon source, a solvent, and the core (10) with the first shell layer (20) to a third reaction in a reactor to coat a second shell layer on a surface of the first shell layer (20), the second shell layer comprising $LiFePO_4$ and carbon, a temperature of the third reaction being between 375°C and 500°C, and a pressure of the third reaction being greater than or equal to 23 MPa.

14. The preparation method according to claim 12 or 13, wherein the lithium source comprises an inorganic lithium salt and an organic lithium salt; the inorganic lithium salt comprises one or more of lithium carbonate, lithium bicarbonate, lithium dihydrogen phosphate, lithium monohydrogen phosphate, lithium phosphate, lithium nitrate, lithium sulfate, lithium chromate, or lithium hydroxide; and the organic lithium salt comprises one or more of lithium oxalate, lithium acetate, lithium benzoate, lithium citrate, or lithium benzoate.

15. The preparation method according to claim 12 or 13, wherein optionally, the iron source comprises one or more of iron oxide, ferrous carbonate, ferrous oxalate, ferrous sulfate, ferrous chloride, or ferrous acetate.

16. The preparation method according to claim 12, wherein the manganese source comprises one or more of manganese monoxide, manganese dioxide, manganese hydroxide, manganese carbonate, manganese oxalate, manganese sulfate, manganese nitrate, manganese sulfate, manganese chloride, or manganese acetate.

17. The preparation method according to claim 12 or 13, wherein the phosphorus source comprises one or more of phosphoric acid, ammonium dihydrogen phosphate, ammonium monohydrogen phosphate, or lithium dihydrogen phosphate.

18. The preparation method according to claim 13, wherein the carbon source comprises one or more of glucose, sucrose, polyvinyl alcohol, starch, or citric acid.

19. The preparation method according to claim 12 or 13, wherein the calcining is carried out in an inert atmosphere, the inert atmosphere comprising one or more of nitrogen, argon, helium, neon, krypton, xenon, or radon.

20. A secondary battery, comprising a positive electrode, a negative electrode, a separator, and an electrolyte solution, the positive electrode comprising a positive electrode plate, the positive electrode plate comprising a current collector and a positive electrode material layer arranged on the current collector, the positive electrode material layer comprising a battery positive electrode material according to any one of claims 1 to 11.

FIG. 1

$LiMn_{0.8}Fe_{0.2}PO_4$

$LiMn_{0.2}Fe_{0.8}PO_4$

FIG. 2

$LiMn_{0.2}Fe_{0.8}PO_4$

$LiMn_{0.8}Fe_{0.2}PO_4$

FIG. 3

Subject a lithium source, an iron source, a manganese source, a phosphorus source, and a solvent to a first reaction in a reactor to obtain a core, the core including $LiMn_xFe_{1-x}PO_4$, where $0<x\leq0.4$, a temperature of the first reaction being 375°C to 500°C, and a pressure of the first reaction being greater than or equal to 23 MPa ⎯ 100

Subject a lithium source, an iron source, a manganese source, a phosphorus source, a solvent, and the core to a second reaction in a reactor to coat a first shell layer on a surface of the core to obtain the core with the first shell layer, the first shell layer including $LiMn_yFe_{1-y}PO_4$, where $0.6\leq y\leq0.9$, a temperature of the second reaction being 375°C to 500°C, and a pressure of the second reaction being greater than or equal to 23 MPa ⎯ 200

Calcine the core with the first shell layer at 500°C to 800°C to obtain the battery positive electrode material ⎯ 300

FIG. 4

Subject a lithium source, an iron source, a manganese source, a phosphorus source, and a solvent to a first reaction in a reactor to obtain a core, the core including $LiMn_xFe_{1-x}PO_4$, where $0<x\leq0.4$, a temperature of the first reaction being 375°C to 500°C, and a pressure of the first reaction being greater than or equal to 23 MPa ⎯ 100

Subject a lithium source, an iron source, a manganese source, a phosphorus source, a solvent, and the core to a second reaction in a reactor to coat a first shell layer on a surface of the core to obtain the core with the first shell layer, the first shell layer including $LiMn_yFe_{1-y}PO_4$, where $0.6\leq y\leq0.9$, a temperature of the second reaction being 375°C to 500°C, and a pressure of the second reaction being greater than or equal to 23 MPa ⎯ 200

Subject a lithium source, an iron source, a phosphorus source, a carbon source, a solvent, and the core with the first shell layer to a third reaction in a reactor to coat a second shell layer on a surface of the first shell layer, the second shell layer including $LiFePO_4$ and carbon, a temperature of the third reaction being 375°C to 500°C, and a pressure of the third reaction being greater than or equal to 23 MPa ⎯ 300

Calcine the core with the first shell layer and the second shell layer at 500°C to 800°C to obtain the battery positive electrode material ⎯ 400

FIG. 5

## INTERNATIONAL SEARCH REPORT

| International application No. |
| --- |
| **PCT/CN2022/120748** |

**A. CLASSIFICATION OF SUBJECT MATTER**

H01M 4/36(2006.01)i; H01M 4/58(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 电池, 正极, 材料, 核, 壳, 磷酸锰铁锂, 磷酸铁锰锂, 包覆, 磷酸铁锂, 碳, LiFePO4, battery, cathode, shell, core, lithium, phosphate, manganese, ferric, carbon, coat+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115036476 A (SHENZHEN DYNANONIC CO., LTD. et al.) 09 September 2022 (2022-09-09)<br>      description, paragraphs 7-17 | 1-5, 9-10, 20 |
| X | CN 105810897 A (BYD CO., LTD.) 27 July 2016 (2016-07-27)<br>      description, paragraphs 2-33 and 39-46 | 1-20 |
| A | CN 106935808 A (BYD CO., LTD.) 07 July 2017 (2017-07-07)<br>      entire document | 1-20 |
| A | CN 106340639 A (HEFEI GUOXUAN HIGH-TECH POWER ENERGY CO., LTD.) 18 January 2017 (2017-01-18)<br>      entire document | 1-20 |
| A | US 2014199475 A1 (SHOWA DENKO K. K.) 17 July 2014 (2014-07-17)<br>      entire document | 1-20 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 November 2022** | **28 November 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 343 888 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 115036476 | A | 09 September 2022 | None | | | |
| CN | 105810897 | A | 27 July 2016 | None | | | |
| CN | 106935808 | A | 07 July 2017 | None | | | |
| CN | 106340639 | A | 18 January 2017 | None | | | |
| US | 2014199475 | A1 | 17 July 2014 | JP | 5329006 | B1 | 30 October 2013 |
| | | | | WO | 2013047510 | A1 | 04 April 2013 |
| | | | | JP | 2013243152 | A | 05 December 2013 |
| | | | | TW | 201332204 | A | 01 August 2013 |
| | | | | JP | WO2013047510 | A1 | 26 March 2015 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111125874